# EUROPEAN PATENT APPLICATION

(11) **EP 4 429 287 A1**
(43) Date of publication of application: **11.09.2024**
(21) Application number: 22889260.0
(22) Date of filing: 01.11.2022
(51) Int. Cl.: H04W 4/70, G05D 1/02

(54) **PAIRING METHOD, MOWING ROBOT, CHARGING DEVICE, AND MACHINE CONTROL SYSTEM**

(30) Priority: 02.11.2021 CN 202111288360
(71) Applicant: Zhejiang Sunseeker Industrial Co., Ltd., Jinhua, Zhejiang 321042 (CN)
(72) Inventor: WANG, Hong, Jinhua, Zhejiang 321042 (CN); ZHOU, Chang, Jinhua, Zhejiang 321042 (CN)
(74) Representative: Pietri, Simona
(86) International application number: PCT/CN2022/128934
(87) International publication number: WO 2023/078236

(57) **Abstract**

A pairing method, a mowing robot (200), a charging device (100), and a machine control system. The pairing method is applied to the mowing robot (200), and comprises: upon detecting a synchronization signal, broadcasting a pairing request signal comprising identification information of the mowing robot (200) (101); determining whether a pairing instruction sent when a first charging device detects the mowing robot (200) matching the identification information in the received pairing request signal is received (102); and if so, pairing the mowing robot (200) with the first charging device (103). According to the pairing method, automatic pairing between the mowing robot (200) and the charging device (100) is achieved, manual consumption is reduced, and matching verification between the identification information in the pairing request signal and the mowing robot (200) is added to the charging device (100), so that mispairing can be avoided to a certain extent.

## Description

### Cross-reference to Related Applications

This patent application claims priority to a Chinese patent application filed on November 2, 2021, with application NO. 2021112883602 and application title "Pairing Method, Mowing Robot, Charging Device, and Robot Control System." The full text of the above application is incorporated herein by reference.

### Technical Field

The present application relates to the field of control technology, and in particular, to a pairing method, a mowing robot, a charging device, and a robot control system.

### Background

Various types of robots appear on the market at present, such as mowing robots, sweeping robots, and mopping robots. Mowing robots are used as an example. Mainstream mowing robots usually travel along a random or regular path to mow a lawn within a predetermined operating area. The predetermined operating area is usually limited by a boundary.

However, when the present robot is paired with a charging pile for charging, a pairing relationship between the robot and the charging pile is manually established in advance, or corresponding configuration information is manually preset in the robot and the charging pile for subsequent pairing. Therefore, automatic pairing cannot be implemented, and labor is wasted.

### Summary

The present application aims to provide a pairing method, a mowing robot, a charging device, and a robot control system, where the mowing robot is automatically paired with the charging device to reduce labor consumption. In addition, matching between identification information in a pairing request signal and the mowing robot is verified in the charging device to avoid incorrect pairing to some extent.

To achieve the above objective, the present application provides a pairing method applied to a mowing robot, the method including: broadcasting a pairing request signal including identification information of the mowing robot upon detecting out synchronous signals; and pairing the mowing robot with a first charging device when receiving a pairing instruction sent by the first charging device upon detecting out the mowing robot matching the identification information in the received pairing request signal.

This application also provides a mowing robot for carrying out the pairing method described above.

The application provides a pairing method for use with charging devices, the method comprising: broadcasting a pairing request signal comprising identification information of the mowing robot upon detecting out synchronous signals; if the broadcasted pairing request signal comprising the identification information of the mowing robot is received, determining whether a first mowing robot matching the identification information in the pairing request signal is detected out; andif the first mowing robot matching the identification information in the pairing request signal is detected out, sending a pairing instruction to the first mowing robot to pair the first mowing robot with the charging device.

This application also provides a charging device used for performing the pairing method described above.

This application also provides a robot control system, comprising the mowing robot and the charging device mentioned above.

In one embodiment, when the mowing robot needs to synchronize its status, checking if the charging signal is detected; when detecting out the charging signals, broadcasting a pairing request signal comprising identification information of the mowing robot; a first charging device determines whether it has detected out the mowing robot matching the identification information in the pairing request signal, and sends a pairing instruction to the mowing robot when it has detected out the mowing robot matching the identification information in the pairing request signal; the mowing robot is paired with the first charging device after receiving the pairing instruction; and therefore, automatic pairing between the mowing robot and the charging device is implemented, and labor consumption is reduced. In addition, matching between the identification information in the pairing request signal and the mowing robot is verified in the charging device to avoid incorrect pairing to some extent.

In one embodiment, after the mowing robot has been paired with the charging device that sending the pair command, it also comprises: when the mowing robot docking with a second charging device, sending a confirming message containing target feature information to the second charging device; the target feature information being the feature information of the charging device paired with the mowing robot; when the confirmation command returned by the second charging device determining that its feature information matching the target feature information, determining that the mowing robot is correctly paired with a second charging device.

In one embodiment, before broadcasting a pairing request signal comprising identification information of the mowing robot, the method further comprises: determining whether the mowing robot has been paired with the first charging device; and if the mowing robot has not been paired with the first charging device, entering the step of broadcasting a pairing request signal comprising identification information of the mowing robot.

In one embodiment, the method further comprises: if the mowing robot has been paired with the first charging device, broadcasting an acknowledgment message comprising target feature information, the target feature information being feature information of the first charging device; and upon receiving an acknowledgment instruction returned by the first charging device when determining that the feature information of the first charging device matches the target feature information, determining that the mowing robot is correctly paired with the first charging device.

In one embodiment, when the acknowledgment instruction returned by the first charging device is not received, a pairing relationship with the first charging device is cleared, and the pairing request signal comprising the identification information of the mowing robot is broadcasted.

In one embodiment, the pairing instruction comprises the feature information of the first charging device; and when the mowing robot is paired with the first charging device, the method further comprises: establishing a binding relationship between the mowing robot and the feature information of the first charging device.

In one embodiment, the synchronous signals comprise charging signals; and after the mowing robot is docked with the charging device, the mowing robot determines that the synchronous signals are detected out when detecting out the charging signals.

In one embodiment, the mowing robot, a second charging device, and a boundary line form a robot control system, the boundary line and the second charging device form a closed loop, and a signal generator in the second charging device sends boundary signals to the boundary line; the synchronous signals comprise the boundary signals that change according to a preset rule; when detecting out that the boundary signals sent by the second charging device change according to the preset rule, the mowing robot determines that the synchronous signals are detected out.

In one embodiment, the preset rule is consecutive interruption for multiple times

In one embodiment, before determining whether a broadcasted pairing request signal comprising identification information of a mowing robot is received, the method further comprises: determining whether the charging device has been paired with a mowing robot; and if the charging device has not been paired with any mowing robot, entering the step of determining whether a broadcasted pairing request signal comprising identification information of a mowing robot is received.

In one embodiment, the method further comprises: if the charging device has been paired with the mowing robot, determining whether an acknowledgment message comprising target feature information, broadcasted by the first mowing robot paired with the charging device, is received, wherein the target feature information is feature information of the charging device paired with the first mowing robot; if the acknowledgment message broadcasted by the first mowing robot is received, determining whether the feature information of the charging device matches the target feature information; and if the feature information of the charging device matches the target feature information, sending an acknowledgment instruction representing information matching to the first mowing robot, so that the first mowing robot determines correct pairing with the charging device.

In one embodiment, if the acknowledgment message comprising the target feature information, broadcasted by the first mowing robot paired with the charging device, is not received, or if the feature information of the charging device does not match the target feature information, the pairing relationship with the paired mowing robot is cleared, and a re-pairing instruction is sent to the currently docked mowing robot.

In one embodiment, the determining whether a first mowing robot matching the identification information in the pairing request signal is detected out comprises: determining, for each detected Bluetooth signal, whether the Bluetooth signal comprises information matching the identification information in the pairing request signal; andif the Bluetooth signal comprises the information matching the identification information in the pairing request signal, using the mowing robot that sends the Bluetooth signal as the first mowing robot.

In one embodiment, the synchronous signals comprise charging signals; and after the charging device is docked with the mowing robot, the charging device determines that the synchronous signals are detected out when detecting out the charging signals.

In one embodiment, a second mowing robot, the charging device, and a boundary line form a robot control system, the boundary line and the charging device form a closed loop, and a signal generator in the charging device sends boundary signals to the boundary line; and the method further comprises:when state synchronization is required, sending the boundary signals that change according to a preset rule to the second mowing robot as the synchronous signals.

In one embodiment, the sending a pairing instruction to the first mowing robot to pair the first mowing robot with the charging device comprises: sending the pairing instruction comprising the feature information of the charging device to the first mowing robot to pair the first mowing robot with the charging device, and establishing a binding relationship between the first mowing robot and the feature information of the charging device.

In one embodiment, when the charging device reaches a set state synchronization cycle, it is determined that the state synchronization is required.

### Brief Description of the Drawings

FIG. 1 is a specific flowchart of a pairing method in a first embodiment of the present application.
FIG. 2 is a schematic diagram of a robot control system applied to the pairing method in the first embodiment of the present application.
FIG. 3 is a specific flowchart of a pairing method in a second embodiment of the present application.
FIG. 4 is a specific flowchart of a pairing method in a third embodiment of the present application.

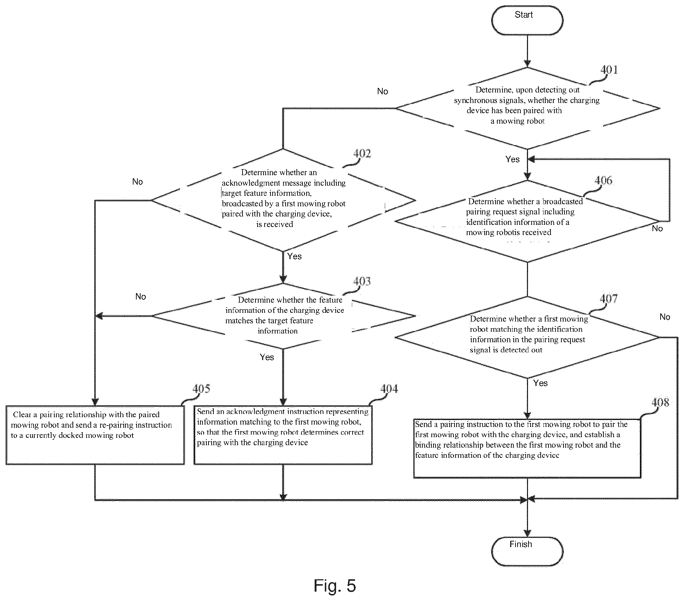

FIG. 5 is a specific flowchart of a pairing method in a fourth embodiment of the present application.
FIG. 6 is a specific flowchart of a pairing method in a fifth embodiment of the present application.

### Detailed Description of the Embodiments

The following will provide a detailed explanation of various embodiments of the present application with reference to the accompanying drawings, in order to better understand the purpose, features, and advantages of the present application. It should be understood that the embodiments shown in the drawings are not limitations to the scope of the present application, but are only intended to illustrate the essence of the technical solution of the present application.

In the description below, certain specific details are elucidated for the purpose of explaining various public implementation examples to provide a thorough understanding of various public implementation examples. However, those skilled in the art will recognize that implementations can be practiced without one or more of these specific details. In other instances, well-known devices, structures, and techniques associated with the present application may not be shown or described in detail to avoid unnecessarily obscuring the description of the implementations.

Unless the context requires otherwise, in the entire specification and claims, the terms "including" and its variants, such as "includes" and "having," should be understood in an open, inclusive sense, i.e. should be interpreted as "including, but not limited to."

Throughout the specification, the mention of "an embodiment" or "one embodiment" indicates that specific features, structures, or characteristics described in the embodiment are included in at least one embodiment. Therefore, the appearance of "in one embodiment" or "in an embodiment" at various locations in the specification does not necessarily all refer to the same embodiment. Additionally, specific features, structures, or characteristics may be combined in any way in one or more embodiments.

The singular form 'a' and 'an' used in this specification and the appended claims include the plural, unless otherwise specified. It should be noted that the term 'or' is generally used in its inclusive sense of 'and/or', unless otherwise specified.

In the following description, in order to clearly demonstrate the structure and operation of this application, many directional words will be used, such as 'front', 'back', 'left', 'right', 'outer', 'inner', 'outward', 'inward', 'up', 'down', etc. However, these words should be understood as convenient terms rather than restrictive terms.

A first embodiment of the present application relates to a pairing method applied to a mowing robot. The mowing robot may be automatically paired with a charging device by means of the pairing method in this embodiment, and the charging device may be a charging pile, a charging base, a charging station including a plurality of charging piles, or the like for charging the mowing robot. It should be noted that specific structures of the mowing robot and the charging device are not specifically limited in this embodiment and subsequent embodiments. As long as the mowing robot and the charging device can implement the pairing method of the present application, they fall within the protection scope of the present application.

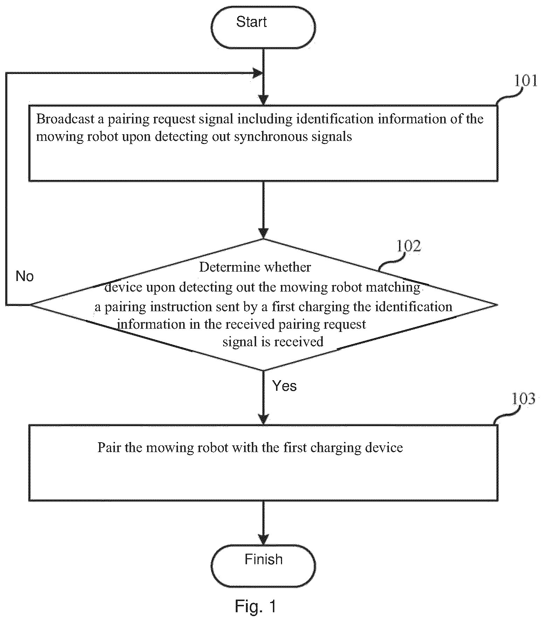

A specific process of the pairing method in this embodiment is shown in FIG. 1.

Step 101: Broadcast a pairing request signal including identification information of the mowing robot upon detecting out synchronous signals.

Specifically, when detecting out the synchronous signals, the mowing robot enters a pairing mode, opens an internal charging channel, and broadcasts the pairing request signal including the identification information of the mowing robot. The identification information is used for uniquely identifying the mowing robot, such as an SN code of the mowing robot. After entering the pairing mode, the mowing robot maintains the pairing mode for a preset duration, such as 30 seconds. If the pairing has not been completed after the preset duration, the mowing robot exits the pairing mode. It should be noted that the pairing request signal broadcasted by the mowing robot may alternatively include feature information of the mowing robot, where the feature information may include electric quantity, charging voltage, charging current, and the like of the moving robot.

The synchronous signals in this embodiment include two types. The first type of synchronous signals includes charging signals. Specifically, after the mowing robot is docked with the charging device, the mowing robot and the charging device enter the charging mode, state synchronization begins, and both the mowing robot and the charging device generate the charging signals. When detecting out the charging signals, the mowing robot determines that the synchronous signals are detected out, then enters the pairing mode, and broadcasts the pairing request signal including the identification information of the mowing robot. The charging signals are about charging voltage, charging current, and the like. The docking between the mowing robot and the charging device may be wireless charging docking or contact charging docking.

The second type of synchronous signals includes boundary signals that change according to a preset rule: the mowing robot, a second charging device, and a boundary line form a robot control system, the boundary line and the second charging device form a closed loop, and a signal generator in the second charging device sends the boundary signals to the boundary line; and when detecting out that the boundary signals sent by the second charging device change according to the preset rule, the mowing robot determines that the synchronous signals are detected out, then enters the pairing mode, and broadcasts the pairing request signal including the identification information of the mowing robot. The preset rule is consecutive interruption for multiple times, for example, consecutive interruption for three times.

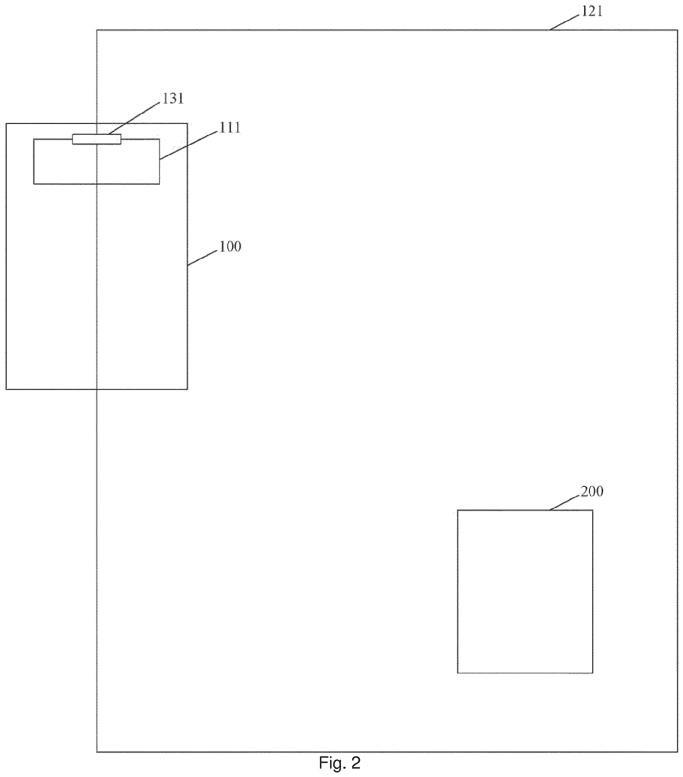

Specifically, with reference to FIG. 2, the robot control system includes a charging device 100, a mowing robot 200, and a boundary line; the charging device 100 is equipped with a first signal generation apparatus and a second signal generation apparatus, the first signal generation apparatus includes a first circuit wire 111 and a control module, the second signal generation apparatus includes a second circuit wire 121, and the first signal generation apparatus and the second signal generation apparatus may share a control module 131; and the first circuit wire 111 is configured such that a projection of an area enclosed by the first circuit wire 111 on a working surface does not exceed a projection of the charging device 100 on the working surface, the mowing robot 200 can sense electromagnetic signals transmitted by the first circuit wire 111 when approaching the charging device 100, and then the charging device 100 performs a corresponding action according to the signals, such as reducing the traveling speed. The second circuit wire 121 is the boundary line, and is configured to at least define an outer boundary of a working area for the mowing robot 200. The charging device 100 transmits boundary signals by means of the second circuit wire 121, the boundary signal generates an electromagnetic field around the boundary, and the mowing robot 200 captures the boundary signals by sensing the electromagnetic field to determine its location within the working area, that is, the mowing robot 200 is limited to travel within the closed area enclosed by the second circuit wire 121. The charging device 100 controls the boundary signals to change according to the preset rule when state synchronization is required. When detecting out that the boundary signals change according to the preset rule, the mowing robot 200 determines that the synchronous signals are detected out, then enters the pairing mode, and broadcasts the pairing request signal including the identification information of the mowing robot.

Step 102: Determine whether a pairing instruction sent by a first charging device upon detecting out the mowing robot matching the identification information in the received pairing request signal is received. If so, step 103 is performed; otherwise, step 101 is performed.

Step 103: Pair the mowing robot with the first charging device.

Specifically, after the first charging device is docked with the mowing robot, state synchronization begins, and the charging device detects out charging signals, determines that the synchronous signals are detected out, then enters the pairing mode, and begins to detect whether it has received the broadcasted pairing request signal. When receiving the pairing request signal broadcasted by the mowing robot, the first charging device determines whether there is a mowing robot matching the identification information in the pairing request signal among the currently docked mowing robots, and sends the pairing instruction to the mowing robot when it is determined that there is the mowing robot matching the identification information in the pairing request signal. The mowing robot is paired with the first charging device when receiving the pairing instruction sent by the first charging device. After the pairing between the first charging device and the mowing robot, the first charging device may perform an operation such as charging on the mowing robot. When determining that there is no mowing robot matching the identification information in the pairing request signal, the first charging device stops pairing, exits the pairing mode, and waits for the next detected synchronous signals before entering the pairing mode.

In one example, both the mowing robot and the charging device are equipped with a manual pairing button. When detecting out that a user triggers the manual pairing button, the mowing robot enters a manual pairing mode, clears pairing information of the currently paired charging device, and broadcasts the pairing request signal including the identification information of the mowing robot. Similarly, when detecting out that a user triggers the manual pairing button, the charging device enters a manual pairing mode, clears pairing information of the currently paired mowing robot, and detects whether it has received the pairing request signal. Subsequent pairing processes are similar to steps 102 and 103, and will not be repeated here.

This embodiment provides a pairing method in which a mowing robot broadcasts a pairing request signal including identification information of the mowing robot when detecting out synchronous signals; after receiving the pairing request signal, a first charging device determines whether it has detected out the mowing robot matching the identification information in the pairing request signal, and sends a pairing instruction to the mowing robot when it has detected out the mowing robot matching the identification information in the pairing request signal; the mowing robot is paired with the first charging device after receiving the pairing instruction; and therefore, automatic pairing between the mowing robot and the charging device is implemented, and labor consumption is reduced. In addition, matching between the identification information in the pairing request signal and the mowing robot is verified in the charging device to avoid incorrect pairing to some extent.

A second embodiment of the present application relates to a pairing method. Compared with the first embodiment, the main improvement of this embodiment is that a mowing robot determines whether it is correctly paired with a currently docked charging device.

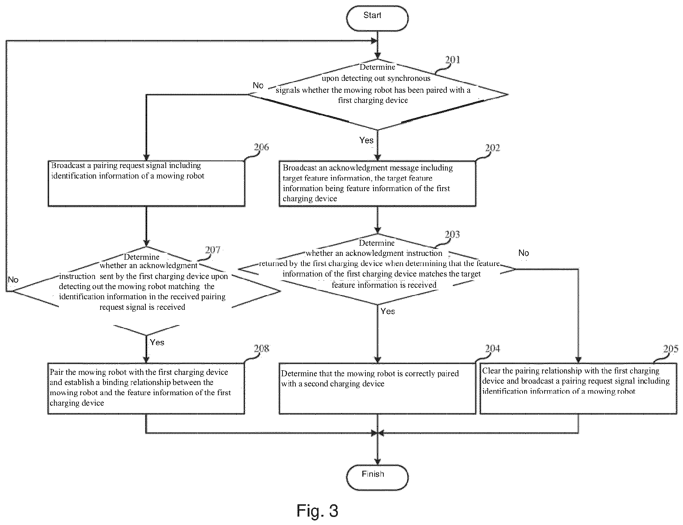

A specific process of the pairing method in this embodiment is shown in FIG. 3.

Step 201: Determine, upon detecting out synchronous signals, whether the mowing robot has been paired with a first charging device. If so, step 202 is performed; otherwise, step 206 is performed.

Specifically, after detecting out the synchronous signals, the mowing robot first determines whether it has been paired with the first charging device, that is, whether it has established a pairing relationship with the first charging device; if it has established the pairing relationship with the first charging device, step 202 is performed; and if it has not established the pairing relationship with the first charging device, step 206 is performed to broadcast a pairing request signal including identification information of the mowing robot, so as to complete automatic pairing subsequently.

Step 202: Broadcast an acknowledgment message including target feature information, the target feature information being feature information of the first charging device.

Step 203: Determine whether an acknowledgment instruction returned by the first charging device when determining that the feature information of the first charging device matches the target feature information is received. If so, step 204 is performed; otherwise, step 205 is performed.

Step 204: Determine that the mowing robot is correctly paired with a second charging device.

Step 205: Clear the pairing relationship with the first charging device and broadcast a pairing request signal including identification information of a mowing robot.

Specifically, when the mowing robot has not established the pairing relationship with the first charging device, the mowing robot broadcasts the acknowledgment message including the target feature information, where the target feature information is feature information of the first charging device paired with the mowing robot, and the feature information of the first charging device is a code used for identifying the charging device, such as an SN code of the charging device; when receiving the acknowledgment message, the first charging device determines whether its own feature information matches the target feature information; when its own feature information matches the target feature information, the first charging device sends the acknowledgment instruction representing information matching to the mowing robot; after receiving the acknowledgment instruction, the mowing robot determines that the mowing robot is correctly paired with the first charging device, the first charging device is a charging device that has established the pairing relationship with the mowing robot, and the first charging device may perform an operation such as charging on the mowing robot subsequently.

If the first charging device has not received the acknowledgment message, or if the charging device that currently receives the acknowledgment message is not the first charging device matching the mowing robot, the mowing robot has not received the acknowledgment instruction sent by the first charging device, clears the pairing relationship with the previously paired first charging device, releases the binding relationship between the mowing robot and the feature information of the paired first charging device, deletes the feature information of the first charging device that has established the pairing relationship with the mowing robot, and then perform steps 206 to 208 to automatically pair with another charging device.

Step 206: Broadcast a pairing request signal including identification information of a mowing robot. This step is substantially the same as step 101 of the first embodiment and will not be repeated here.

Step 207: Determine whether a pairing instruction sent by the first charging device upon detecting out the mowing robot matching the identification information in the received pairing request signal is received. If so, step 208 is performed; otherwise, step 201 is performed.

Step 208: Pair the mowing robot with the first charging device and establish a binding relationship between the mowing robot and the feature information of the first charging device. This step is substantially the same as step 103 of the first embodiment and will not be repeated here.

Step 207 is substantially the same as step 102 of the first embodiment, with the main difference that the pairing instruction further includes the feature information of the first charging device. After receiving the pairing instruction sent by the first charging device, the mowing robot stores the feature information of the first charging device in the pairing instruction, so as to establish the binding relationship between the mowing robot and the feature information of the first charging device when the mowing robot is paired with the first charging device in step 208.

In this embodiment, after the mowing robot detects out the synchronous signals, if the mowing robot has been paired with the first charging device, the mowing robot determines whether it is correctly paired with the first charging device, that is, verifies the pairing relationship, so as to stop communication between the mowing robot and the charging device in case of incorrect pairing and automatically perform re-pairing.

A third embodiment of the present application relates to a pairing method applied to a charging device. The charging device may be a charging pile, a charging base, a charging station including a plurality of charging piles, or the like for charging a mowing robot. The charging device may be automatically paired with a mowing robot by means of the pairing method in this embodiment. The mowing robot may be a robot used for mowing, a robot used for sweeping, a robot used for mopping, or the like.

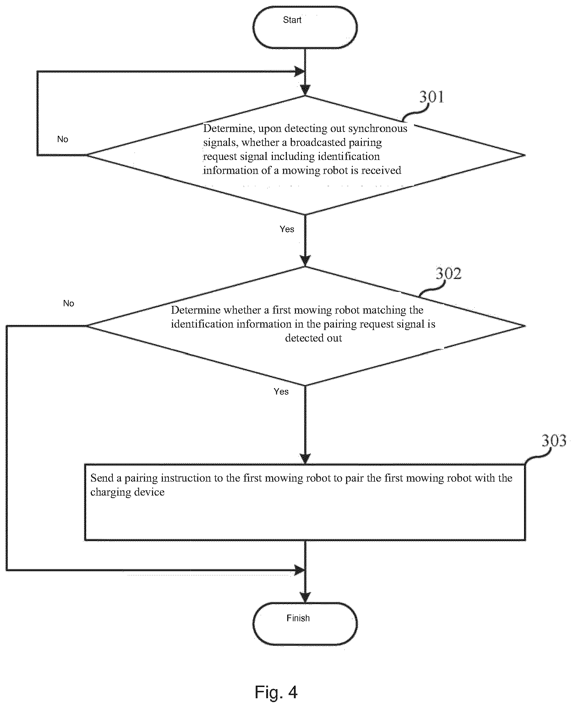

A specific process of the pairing method in this embodiment is shown in FIG. 4.

Step 301: Determine, upon detecting out synchronous signals, whether a broadcasted pairing request signal including identification information of a mowing robot is received. If so, step 302 is performed; otherwise, step 301 is performed.

Step 302: Determine whether a first mowing robot matching the identification information in the pairing request signal is detected out. If so, step 303 is performed; otherwise, the process directly ends.

Step 303: Send a pairing instruction to the first mowing robot to pair the first mowing robot with the charging device.

Specifically, upon detecting out the synchronous signals, the charging device enters a pairing mode and begins to detect whether it has received the pairing request signal broadcasted by the mowing robot, where the pairing request signal includes the identification information of the mowing robot; when receiving the pairing request signal broadcasted by the mowing robot, the charging device determines whether there is a mowing robot matching the identification information in the pairing request signal among the currently detected mowing robots; if there is the mowing robot (denoted as the first mowing robot) matching the identification information in the pairing request signal among the currently detected mowing robots, the charging device sends the pairing instruction to the first mowing robot; the first mowing robot is paired with the charging device when receiving the pairing instruction sent by the charging device, and the charging device may perform an operation such as charging on the first mowing robot subsequently; and when detecting out that there is no mowing robot matching the identification information in the pairing request signal among the detected mowing robots, the charging device may stop pairing and exit the pairing mode. After entering pairing mode, the charging device maintains the pairing mode for a preset duration. If no pairing request signal including identification information of a mowing robot is received within the preset duration, the charging device determines that there is currently no mowing robot for pairing, stops pairing, and exits the pairing mode.

In step 301, the charging device may start a timer after detecting out the synchronous signals and entering the pairing mode, where the timing duration of the timer is the preset duration. If any pairing request signal is still not received after the timer finishes timing, the charging device exits the pairing mode.

The synchronous signals detected out by the charging device may be about charging signals. When the charging device is docked with the mowing robot, the charging device enters a charging mode, and both the mowing robot and the charging device generate the charging signals. When detecting out the charging signals, the charging device determines that it has detected out the synchronous signal, and then enters the pairing mode, where the charging signals are about charging voltage, charging current, or the like. The docking between the charging device and the mowing robot may be wireless charging docking or contact charging docking.

In this embodiment, a second mowing robot, the charging device, and a boundary line form a robot control system, the boundary line and the charging device form a closed loop, and a signal generator in the charging device sends boundary signals to the boundary line; and the method further includes: sending the boundary signals that change according to a preset rule to the second mowing robot as the synchronous signals when state synchronization is required. Specifically, in the robot control system, the charging device may perform the state synchronization according to a preset cycle, that is, perform the state synchronization after a preset time interval or after each restart. When the state synchronization is required, the charging device controls the boundary signals to change according to the preset rule. When detecting out that the boundary signals change according to the preset rule, the mowing robot determines that the synchronous signals are detected out, then enters a pairing mode, opens an internal charging channel, and broadcasts a pairing request signal including identification information of a mowing robot, where the identification information is used for uniquely identifying the mowing robot, such as an SN code. The preset rule is, for example, consecutive interruption for multiple times. Refer to FIG. 2 and related descriptions in the first embodiment for details, which will not be repeated here.

In one example, both the mowing robot and the charging device are equipped with a manual pairing button. When detecting out that a user triggers the manual pairing button, the mowing robot enters a manual pairing mode, clears pairing information of the currently paired charging device, and broadcasts the pairing request signal including the identification information of the mowing robot. Similarly, when detecting out that a user triggers the manual pairing button, the charging device enters a manual pairing mode, clears pairing information of the currently paired mowing robot, and detects whether it has received the pairing request signal. The pairing processes are similar to steps 301 to 303, and will not be repeated here.

This embodiment provides a pairing method in which a charging device determines whether it has received a broadcasted pairing request signal including identification information of a mowing robot upon detecting out synchronous signals, determines whether there is a first mowing robot matching the identification information in the pairing request signal among the currently detected mowing robots upon detecting out the pairing request signal, and sends a pairing instruction to the first mowing robot if there is the first mowing robot matching the identification information in the pairing request signal, so that the charging device can be paired with the first mowing robot; thus, automatic pairing between the mowing robot and the charging device is achieved, and labor consumption is reduced; and matching between the identification information in the pairing request signal and the mowing robot is verified in the charging device to avoid incorrect pairing to some extent.

A fourth embodiment of the present application relates to a pairing method. Compared with the third embodiment, the main improvement of this embodiment is that a charging device determines whether it is correctly paired with a currently docked mowing robot.

A specific process of the pairing method in this embodiment is shown in FIG. 4.

Step 401: Determine, upon detecting out synchronous signals, whether the charging device has been paired with a mowing robot. If so, step 402 is performed; otherwise, step 406 is performed. This step is substantially the same as step 301 of the third embodiment and will not be repeated here.

Step 402: Determine whether an acknowledgment message including target feature information, broadcasted by a first mowing robot paired with the charging device, is received, where the target feature information is feature information of the charging device paired with the first mowing robot. If so, step 403 is performed; otherwise, step 405 is performed.

Step 403: Determine whether the feature information of the charging device matches the target feature information. If so, step 404 is performed; otherwise, step 405 is performed.

Step 404: Send an acknowledgment instruction representing information matching to the first mowing robot, so that the first mowing robot determines correct pairing with the charging device.

Step 405: Clear a pairing relationship with the paired mowing robot and send a re-pairing instruction to a currently docked mowing robot.

Step 406: Determine whether a broadcasted pairing request signal including identification information of a mowing robot is received. If so, step 407 is performed; otherwise, step 406 is performed. This step is substantially the same as step 301 of the third embodiment and will not be repeated here.

Step 407: Determine whether a first mowing robot matching the identification information in the pairing request signal is detected out. If so, step 303 is performed; otherwise, the process directly ends. This step is substantially the same as step 302 of the third embodiment and will not be repeated here.

Step 408: Send a pairing instruction to the first mowing robot to pair the first mowing robot with the charging device, and establish a binding relationship between the first mowing robot and the feature information of the charging device. This step is substantially the same as step 303 of the third embodiment, with the main difference that the pairing instruction sent by the charging device to the first mowing robot includes the feature information of the charging device. When receiving the pairing instruction sent by the charging device, the first mowing robot stores the feature information of the charging device in the pairing instruction and establishes the binding relationship between the first mowing robot and the feature information of the charging device.

Specifically, upon detecting out the synchronous signals, the charging device first determines whether it has been paired with a mowing robot; and if the charging device has been paired with the mowing robot (the mowing robot currently docked with the charging device is represented by a first mowing robot), the charging device waits for receiving the acknowledgment message including target feature information broadcasted by the mowing robot, where the target feature information is the feature information of the charging device paired with the mowing robot, and the feature information of the charging device is a code used for identifying the charging device, such as an SN code.

When the mowing robot has been paired with the charging device, the mowing robot broadcasts the acknowledgment message including target feature information; when the charging device has not received the acknowledgment message including target feature information broadcasted by the mowing robot, the charging device clears the pairing relationship with the paired mowing robot and sends the re-pairing instruction to the currently docked mowing robot; and if the charging device has stored the identification information of the paired mowing robot, the charging device deletes the identification information of the paired mowing robot at the same time. When receiving the acknowledgment message including target feature information broadcasted by the mowing robot, the charging device determines whether its own feature information matches the target feature information; when its own feature information matches the target feature information, the charging device determines that the currently docked mowing robot is the first mowing robot paired with the charging device, and sends the acknowledgment instruction representing information matching to the first mowing robot; after receiving the acknowledgment instruction, the first mowing robot determines that the first mowing robot is correctly paired with the charging device, where the charging device is a charging device that has established a pairing relationship with the first mowing robot, and the charging device may perform an operation such as charging on the first mowing robot subsequently; when its own feature information does not match the target feature information, the charging device clears the pairing relationship with the paired mowing robot and sends the re-pairing instruction to the currently docked mowing robot; and if the charging device has stored the identification information of the paired mowing robot, the charging device deletes the identification information of the paired mowing robot at the same time.

In this embodiment, after the charging device is docked with the mowing robot, the charging device determines whether it is correctly paired with the currently docked mowing robot, that is, verifies the pairing relationship, so as to stop communication between the mowing robot and the charging device in case of incorrect pairing and automatically perform re-pairing.

A fifth embodiment of the present application relates to a pairing method. Compared with the third embodiment, the main difference of this embodiment is that this embodiment provides a specific implementation for determining whether a first mowing robot matching identification information in a pairing request signal is detected out.

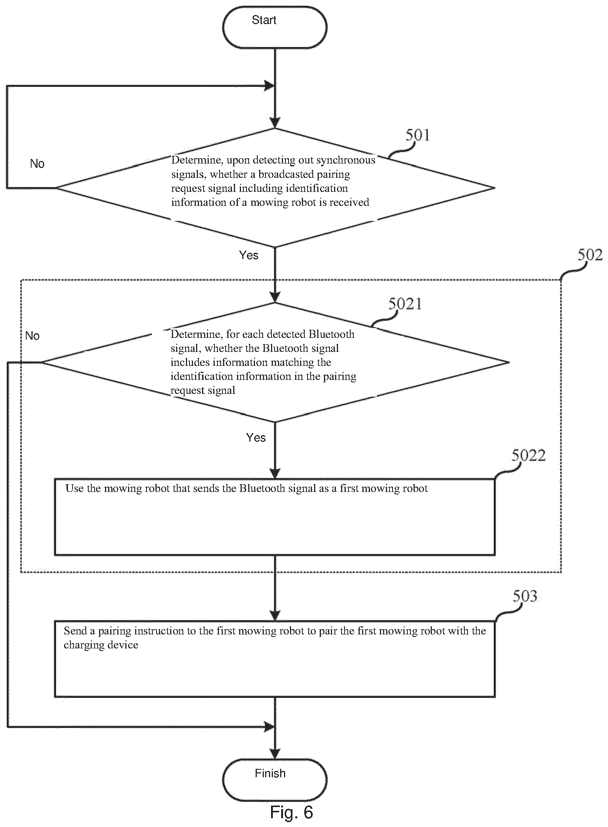

A specific process of the pairing method in this embodiment is shown in FIG. 6.

Step 501: Determine, upon detecting out synchronous signals, whether a broadcasted pairing request signal including identification information of a mowing robot is received. If so, step 502 is performed; otherwise, step 501 is performed. This step is substantially the same as step 301 of the third embodiment and will not be repeated here.

Step 502 includes the following sub steps:
Sub step 5021: Determine, for each detected Bluetooth signal, whether the Bluetooth signal includes information matching the identification information in the pairing request signal. If so, step 5032 is performed; otherwise, the process directly ends.

Sub step 5022: Use the mowing robot that sends the Bluetooth signal as a first mowing robot.

Specifically, after detecting out the synchronous signals, the charging device enters a pairing mode and begins to detect whether it has received the pairing request signal, where the pairing request signal includes the identification information of the mowing robot; when receiving the pairing request signal broadcasted by the mowing robot, the charging device opens a Bluetooth module and opens a Bluetooth search mode to search for Bluetooth signals sent by surrounding mowing robots, where the pairing request signal includes the identification information of the mowing robot, such as an SN code; for each searched Bluetooth signal, the charging device determines whether the SN code in the Bluetooth signal is the same as the SN code in the pairing request signal; and when the SN code in the Bluetooth signal is the same as the SN code in the pairing request signal, the charging device determines that the mowing robot sending the Bluetooth signal is the mowing robot docked with the charging device, namely, the first mowing robot.

Step 503: Send a pairing instruction to the first mowing robot to pair the first mowing robot with the charging device. This step is substantially the same as step 303 of the third embodiment and will not be repeated here.

A sixth embodiment of the present application relates to a mowing robot, which may perform the pairing method in the first or second embodiment to automatically pair with a charging device. The mowing robot may include: a controller, a sensing apparatus, a wired or wireless charging module, a motion module, and the like, which will not be elaborated here.

A seventh embodiment of the present application relates to a charging device, which may be a charging pile, a charging base, a charging station including a plurality of charging piles, or the like for charging a mowing robot. The charging device may be automatically paired with the mowing robot by means of the pairing method in the third to fifth embodiments. The charging device may include: a controller, a sensing apparatus, a wired or wireless charging module, and the like, which will not be elaborated here.

An eighth embodiment of the present application relates to a robot control system, which includes the mowing robot in the sixth embodiment and the charging device in the seventh embodiment. Refer to FIG. 2 for details. The robot control system includes a charging device 100, a mowing robot 200, and a boundary line.

## Claims

1. A pairing method applied to a mowing robot, the method comprising:
broadcasting a pairing request signal comprising identification information of the mowing robot upon detecting out synchronous signals; and
pairing the mowing robot with a first charging device when receiving a pairing instruction sent by the first charging device upon detecting out the mowing robot matching the identification information in the received pairing request signal.

2. The pairing method according to claim 1, wherein before broadcasting a pairing request signal comprising identification information of the mowing robot, the method further comprises:
determining whether the mowing robot has been paired with the first charging device; and
if the mowing robot has not been paired with the first charging device, entering the step of broadcasting a pairing request signal comprising identification information of the mowing robot.

3. The pairing method according to claim 2, wherein the method further comprises:
if the mowing robot has been paired with the first charging device, broadcasting an acknowledgment message comprising target feature information, the target feature information being feature information of the first charging device; and
upon receiving an acknowledgment instruction returned by the first charging device when determining that the feature information of the first charging device matches the target feature information, determining that the mowing robot is correctly paired with the first charging device.

4. The pairing method according to claim 3, wherein when the acknowledgment instruction returned by the first charging device is not received, a pairing relationship with the first charging device is cleared, and the pairing request signal comprising the identification information of the mowing robot is broadcasted.

5. The pairing method according to claim 1, wherein the pairing instruction comprises the feature information of the first charging device; and
when the mowing robot is paired with the first charging device, the method further comprises:
establishing a binding relationship between the mowing robot and the feature information of the first charging device.

6. The pairing method according to claim 1, wherein the synchronous signals comprise charging signals; and after the mowing robot is docked with the charging device, the mowing robot determines that the synchronous signals are detected out when detecting out the charging signals.

7. The pairing method according to claim 1, wherein the mowing robot, a second charging device, and a boundary line form a robot control system, the boundary line and the second charging device form a closed loop, and a signal generator in the second charging device sends boundary signals to the boundary line; the synchronous signals comprise the boundary signals that change according to a preset rule:
when detecting out that the boundary signals sent by the second charging device change according to the preset rule, the mowing robot determines that the synchronous signals are detected out.

8. The pairing method according to claim 7, wherein the preset rule is consecutive interruption for multiple times.

9. A pairing method applied to a charging device, the method comprising:
determining, upon detecting out synchronous signals, whether a broadcasted pairing request signal comprising identification information of a mowing robot is received;
if the broadcasted pairing request signal comprising the identification information of the mowing robot is received, determining whether a first mowing robot matching the identification information in the pairing request signal is detected out; and
if the first mowing robot matching the identification information in the pairing request signal is detected out, sending a pairing instruction to the first mowing robot to pair the first mowing robot with the charging device.

10. The pairing method according to claim 9, wherein before determining whether a broadcasted pairing request signal comprising identification information of a mowing robot is received, the method further comprises:
determining whether the charging device has been paired with a mowing robot; and
if the charging device has not been paired with any mowing robot, entering the step of determining whether a broadcasted pairing request signal comprising identification information of a mowing robot is received.

11. The pairing method according to claim 10, wherein the method further comprises:
if the charging device has been paired with the mowing robot, determining whether an acknowledgment message comprising target feature information, broadcasted by the first mowing robot paired with the charging device, is received, wherein the target feature information is feature information of the charging device paired with the first mowing robot;
if the acknowledgment message broadcasted by the first mowing robot is received, determining whether the feature information of the charging device matches the target feature information; and
if the feature information of the charging device matches the target feature information, sending an acknowledgment instruction representing information matching to the first mowing robot, so that the first mowing robot determines correct pairing with the charging device.

12. The pairing method according to claim 11, wherein if the acknowledgment message comprising the target feature information, broadcasted by the first mowing robot paired with the charging device, is not received, or if the feature information of the charging device does not match the target feature information, the pairing relationship with the paired mowing robot is cleared, and a re-pairing instruction is sent to the currently docked mowing robot.

13. The pairing method according to claim 10, wherein the determining whether a first mowing robot matching the identification information in the pairing request signal is detected out comprises:
determining, for each detected Bluetooth signal, whether the Bluetooth signal comprises information matching the identification information in the pairing request signal; and
if the Bluetooth signal comprises the information matching the identification information in the pairing request signal, using the mowing robot that sends the Bluetooth signal as the first mowing robot.

14. The pairing method according to claim 10, wherein the synchronous signals comprise charging signals; and after the charging device is docked with the mowing robot, the charging device determines that the synchronous signals are detected out when detecting out the charging signals.

15. The pairing method according to claim 10, wherein a second mowing robot, the charging device, and a boundary line form a robot control system, the boundary line and the charging device form a closed loop, and a signal generator in the charging device sends boundary signals to the boundary line; and the method further comprises:
when state synchronization is required, sending the boundary signals that change according to a preset rule to the second mowing robot as the synchronous signals.

16. The pairing method according to claim 10, wherein the sending a pairing instruction to the first mowing robot to pair the first mowing robot with the charging device comprises:
sending the pairing instruction comprising the feature information of the charging device to the first mowing robot to pair the first mowing robot with the charging device, and establishing a binding relationship between the first mowing robot and the feature information of the charging device.

17. The pairing method according to claim 15, wherein when the charging device reaches a set state synchronization cycle, it is determined that the state synchronization is required.

18. A mowing robot, used for performing the pairing method according to any one of claims 1 to 9.

19. A charging device, used for performing the pairing method according to any one of claims 10 to 17.

20. A robot control system, comprising the mowing robot according to claim 18 and the charging device according to claim 19.

21. The robot control system according to claim 20, wherein both the mowing robot and the charging device comprise a wireless radio frequency communication module; and
a way of pairing between the mowing robot and the charging device is: pairing between the wireless radio frequency communication module in the mowing robot and the wireless radio frequency communication module in the charging device to pair the mowing robot with the charging device.

22. The robot control system according to claim 21, wherein the wireless radio frequency communication module comprises a 433 MHz wireless module and/or an 868 MHz wireless module.
